# EUROPÄISCHE PATENTSCHRIFT

(11) **EP 2 628 582 B1**
(45) Veröffentlichungstag und Bekanntmachung des Hinweises auf die Patenterteilung: **11.07.2018**
(21) Anmeldenummer: 13000638.0
(22) Anmeldetag: 07.02.2013
(51) Int. Cl.: B29B 13/02, B29C 35/04, B29C 53/84, B29L 31/00

(54) **Aufheizgerät für gestreckte Werkstücke**
Heating device for elongated workpieces
Appareil de chauffage pour des pièces usinées de forme allongée

(30) Priorität: 14.02.2012 DE 202012001512 U
(43) Veröffentlichungstag der Anmeldung: 21.08.2013
(73) Patentinhaber: Maschinen Witte GmbH + Co.KG, 49176 Hilter (DE)
(72) Erfinder: Witte Heinz-Dieter, 49176 Hilter (DE); Holzlöhner Uwe, 49201 Dissen (DE)
(74) Vertreter: Wischmeyer, André

(56) Entgegenhaltungen:
- DE-A1- 2 443 395
- DE-A1- 4 000 355
- DE-A1-102007 050 948
- GB-A- 1 338 324

## Beschreibung

Aufheizgeräte werden insbesondere für thermoplastische Kunststoff-(Vor-)Produkte eingesetzt, um diese in einer gewünschten Weise nachverformen zu können. Die überaus heikle Verformung im erweichten Zustand setzt für die zu erreichende und einzuhaltende Warmverformungstemperatur enge Toleranzen, die einheitlich über den Querschnitt des Werkstücks und über die zur Verformung vorgesehen Länge einzuhalten sind. Insbesondere sind oft im Querschnitt komplexe Kunststoffhohlprofile für Fenster oder Türen mit einem Bogen zu versehen, an den sich gerade (unverformte) Werkstückbereiche anschließen sollen. Diese als Strangprofil in gerade gestreckter Form und mit exaktem Querschnitt gelieferten Werkstücke sind außerhalb der Bogen zweckmäßig von einer Erhitzung auf eine Warmtemperatur auszunehmen, um die gerade und querschnittstreue Form zu erhalten und die geraden, "kalten" Bereiche des Werkstücks für die Handhabung beim Erhitzen und beim Bogenformen zur Verfügung zu halten.

Die DE 199 06 751 A1 offenbart ein Aufheizgerät mit längs eines Werkstückkanals erstreckten Heizkörpern, mit denen über einen Umluftstrom und eine besondere Verteilung von (Rückstrom-)Öffnungen eine gut vereinheitlichte Warmlufteinwirkung auf die Werkstücke erzielbar ist. Das Aufheizgerät hat aber einen Werkstückkanal fest vorgegebener Länge und lässt eine Abstimmung eines zu erweichenden Werkstückbereichs auf eine zu erzielende Bogenlänge und die Abgrenzung zu nicht aufzuheizenden Werkstückenden nicht zu.

Ein anderes Aufheizgerät nach DE 37 35 225 C1 sieht zwar vor, die zu erwärmenden Zonen des Werkstücks in der Länge nach mit Hilfe von Abschottungselementen innerhalb des Werkstückkanals stufenweise einzustellen, wobei die Abschottungselemente querschnittsgerechte Durchlassöffnungen für das Werkstück aufweisen und auch ein Heizkanal mit Hilfe von Klappen auf unterschiedliche Längen eingestellt werden kann. Die Handhabung ist allerdings umständlich, da die Abschottungselemente intern anzubringen sind und das Werkstück über die gesamte Länge des Aufheizelementes unzugänglich bleibt. Zudem ist eine Erwärmung mit einem einzigen, anströmseitig für den Umluftbetrieb vorgesehenen Heizkörper von Haus aus ungünstig für eine gleichmäßige Werkstückerwärmung.

Ein anderes Aufheizgerät nach der DE 40 00 355 A1 offenbart den Oberbegriff des Anspruchs 1 und zeigt einen Werkstückkanal und einen mitlaufenden Heizkanal mit einer Reihe von Segmenten oder Zonen, in die Heizmittel wie etwa Luft in einer gesteuerten Weise einzuspeisen ist. Allerdings arbeitet dieses Aufheizgerät nicht im Umluftbetrieb, sondern bläst das zonenweise eingespeiste Heizmittel wie etwa Warmluft in einem gemeinsamen Auslass aus. Die Arbeitsweise der dort beschriebenen Vorrichtung ist darauf gerichtet, Strangmaterial im Durchlauf durch den Aufheizkanal zu bewegen und dabei möglichst schnell aber gleichmäßig aufzuheizen. Ein solches Durchlaufverfahren ist in der Praxis nur für besondere Fälle wirtschaftlich vorzusehen, sonst aber wegen des Ausstoßes an Heizmitteln nicht praktikabel.

Aufgabe der Erfindung ist es, die Handhabung eines solchen Aufheizgerätes weiter zu verbessern und die Aufheizung von Werkstücken, insbesondere Kunststoffhohlprofil-Werkstücken, hinsichtlich der Temperatur und vor allem hinsichtlich der aufzuheizenden Längsabschnitte zu präzisieren und ein Aufheizgerät zu schaffen, das unbeschadet einer praxisgerecht einfachen Handhabbarkeit und einer erforderlichen hohen und gezielten Präzision der Aufheizung robust und einfach im Aufbau zu erstellen ist.

Gemäß der Erfindung wird diese Aufgabe von einem Aufheizgerät nach dem Oberbegriff des Anspruchs 1 mit den kennzeichnenden Merkmalen des Anspruchs 1 gelöst.

Die erfindungsgemäße Lösung sieht einen in der Länge variablen Werkstückkanal vor, der den Einschluss des Werkstücks auf den aufzuheizenden Längsabschnitt des Werkstücks zu begrenzen erlaubt, wenn das Werkstück nicht in gesamter Länge auf eine Warmformtemperatur erhitzt werden soll. Im letzteren Fall handelt es sich ohnehin um relativ kurze und von der Handhabung her unproblematische Werkstücke. Bei langen und entsprechend sperrigen Werkstücken ist es aber für die Handhabung von Interesse, die nicht aufzuheizenden Längsabschnitte zugänglich zu erhalten und insbesondere nach dem Aufheizen auf eine Warmformtemperatur des Werkstücks zur Entnahme kurz neben dem aufgeheizten Bereich erfassen zu können.

Die Einstellbarkeit des aufzuheizenden Bereichs mit Hilfe von zumindest einem Verlängerungssegment kann dabei auch in relativ kleinen Stufen einfach vorgesehen werden, um nicht nur Heizenergie zu sparen, sondern auch die nicht zu verformenden Längsabschnitte kalt bzw. unterhalb der Warmformtemperatur zu halten und damit unerwünschte, meist handhabungsbedingte Verformungen zu vermeiden. Ein Verlängerungssegment in ausziehbarer oder verschließbarer Form kann sogar eine stufenlose Einstellung des Heizkanals in seiner Länge ermöglichen.

Es versteht sich, dass Verlängerungssegmente zu beiden Enden eines Kernsegments vorgesehen sein können und dass die Verlängerungssegmente ihrerseits mit weiteren Verlängerungssegmenten ergänzt werden können. Eine bevorzugte Ausführungsform sieht allerdings vor, dass ein Verlängerungssegment teleskopartig mit dem Kernsegment zusammenschiebbar ist bzw. dass auch zwei Verlängerungssegmente zu beiden Enden des Kernsegments vorgesehen sind, die zusammenschiebbar mit dem Kernsegment einen beidseitig verlängerbaren Heizkanal schaffen. Dies ermöglicht eine relativ einfache Bauweise, indem die Verlängerungssegmente teleskopartig in das Kernsegment einzuschieben oder auf das Kernsegment aufzuschieben sind, wie auch eine einfache Führung und Lagerung der Verlängerungssegmente bei und nach dem Ausziehen.

Der Heizkanal verläuft zweckmäßig unterhalb des Werkstückkanals, so dass dieser durch gleichmäßig aufsteigende und umgewälzte Warmluft gleichmäßig temperiert ist, ohne dass der gebläsegenerierte Umluftstrom das Werkstück direkt erfasst und strömungsbedingte unterschiedliche Erwärmungen erzeugt. Über einem solchen Werkstückkanal kann ein Verlängerungssegment als ausziehbare Haube gestaltet sein, die den Werkstückkanal nur noch nach oben und zu den Längsseiten hin abschließt und abschirmt.

Der Heizkanal wird mit längs des Werkstückkanals erstreckten Heizkörpern versehen, die zumindest teilweise schaltbar sind. Diese Schaltbarkeit der Heizkörper bezieht sich insbesondere auf den Bereich der Verlängerungssegmente, die nur im ausgezogenen Zustand beheizt werden, während das Kernsegment nicht abschaltbar ausgeführt werden muss. Die längsverteilte Anordnung der Heizkörper, insbesondere in Form von längs des Werkstückkanals erstreckten Heizstäben, hat sich als vorteilhaft für eine präzise und schonende Aufheizung erwiesen. Diese Heizstäbe können zweckmäßig in der Länge so bemessen sein, dass sie passend zu den Enden der Segmente unterteilt sind und dementsprechend segmentgerecht geschaltet werden können.

Der die gesamte Länge des Werkstückkanals, d.h. auch die Längsbereiche der Verlängerungssegmente abdeckende Heizkanal kann mit Hilfe der schaltbaren Heizkörper nur auf der gewünschten Teillänge beheizt sein, dient aber insgesamt als Werkstückauflage, wenn der Heizkörper zweckmäßig unterhalb des Werkstückkanals verläuft. In den nicht durch Verlängerungssegmente abgedeckten Längsbereiche bleibt das Werkstück unerhitzt und für die Handhabung direkt zugänglich.

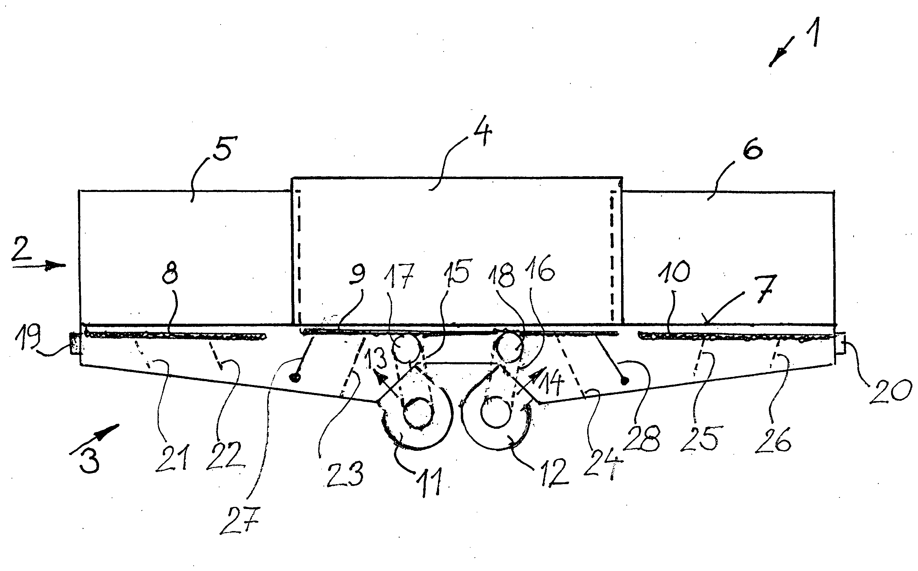

Ein Ausführungsbeispiel der Erfindung ist in der Zeichnung dargestellt und wird nachfolgend näher beschrieben. Die einzige Figur der Zeichnung zeigt eine schematisierte, teilweise schnittbildliche Seitenansicht eines erfindungsgemäßen Aufheizgerätes.

Ein in der Zeichnung insgesamt mit 1 bezeichnetes Aufheizgerät ist kastenartig aus Blechteilen gebildet, die an den außenliegenden Wänden mit einer Wärmeisolierung versehen sind, um einerseits eine Verbrennungsgefahr bei Berührung und andererseits Verluste von Wärmeenergie zu vermeiden. Das Aufheizgerät 1 gliedert sich im wesentlichen in einen horizontal langgestreckten obenliegenden Werkstückkanal 2 und einen unmittelbar unter dem Werkstückkanal 2 und über dessen ganze Länge ebenfalls horizontal langgestreckt verlaufenden Aufheizkanal 3.

Der Werkstückkanal 2 setzt sich aus unterschiedlichen Segmenten, nämlich einem mittleren Kernsegment 4 und zwei Verlängerungssegmenten 5 und 6 zusammen, von denen das Kernsegment 4 fest mit dem Aufheizkanal 3 verbunden ist, während die Verlängerungssegmente 5 und 6 beweglich sind und die horizontale Längserstreckung des Kernsegments zu beiden einander gegenüberliegenden Stirnseiten ergänzen.

Die Segmente 4,5,6 sind hauben- oder tunnelförmig ausgebildet mit einem freien Innenraum, der von beiden gegenüberliegenden Stirnseiten her zugänglich ist und das Einführen bzw. Durchstecken eines Werkstücks erlaubt. Die nicht dargestellten freien stirnseitigen Öffnungen können wahlweise noch durch Klappen, flexible Vorhänge oder dgl. gegen einen Zutritt von Außenluft oder einen Austritt von Innenluft abgeschirmt sein, ohne die Handhabung zu behindern, wenn ein Werkstück etwa aus thermoplastischem Kunststoff, wie beispielsweise ein Kunststoff-Hohlprofil-Werkstück, der Länge nach eingesetzt oder nach einem Aufheizen entnommen wird. Dabei können Werkstückenden, die nicht auf eine Warmverformungstemperatur aufgeheizt werden sollen, beidseitig aus dem Werkstückkanal 2 nach außen hin vorstehen.

Die Segmente 4,5 und 6 sind teleskopartig ineinanderschiebbar in der Weise gestaltet, dass der lichte Querschnitt des Kernsegments 4 groß genug ist, den Außenquerschnitt der Verlängerungssegmente 5 bzw. 6 aufzunehmen. Durch teleskopartiges Zusammenschieben der Segmente ist die horizontale Gesamtlänge des Werkstückkanals 2 veränderlich und kann auf ein Werkstück abgestimmt werden, an dem nur ein vorgegebener Längsabschnitt auf eine Warmformtemperatur gebracht, der Rest aber nicht erhitzt werden soll.

Die Bauweise mit haubenartigen Segmenten, die der Länge nach zusammenschiebbar sind, ist besonders einfach und robust und ließe sich selbstverständlich auch in der Weise realisieren, dass die Verlängerungssegmente 5,6 alternativ mit einem lichten Querschnitt ausgestattet werden, der den Außenquerschnitt des Kernsegments aufnimmt, so dass sie über das Kernsegment 4 zu schieben sind. In der Praxis sind aber auch nicht zusammenschiebbare Segmente verwendbar, die beispielsweise mit gleichem Querschnitt auf Stoß aneinandergesetzt werden. In diesem Fall lässt sich die Länge des Werkstückkanals nur in vorgegebenen Stufen verändern, wobei sich dann eine größere Zahl kürzerer Verlängerungssegmente empfiehlt.

Der Aufheizkanal 3 ist in seiner horizontalen Erstreckung unveränderlich und dient bei Werkstücken, die etwa nur in einem mittleren Längsabschnitt im Kernsegment 4 erhitzt werden, insgesamt als Auflagefläche 7, die für den Zutritt von Warmluft von unten mit Zwischenöffnungen (nicht dargestellt) versehen ist. Vorzugsweise ist die Auflagefläche 7 durch zumindest ein Lochblech, Drahtgitter oder einen Stabrost gebildet.

Unterhalb der Auflagefläche 7 sind Heizkörper 8,9,10 angeordnet, die im vorliegenden Fall als in Längsrichtung des Werkstückkanals 2 langgestreckte Stabheizkörper ausgebildet und so bemessen sind, dass sie sich nur jeweils unter einem der Segmente 4,5,6 erstrecken. Von diesen Heizkörpern sind die Heizkörper 8 und 10 unter den Verlängerungssegmenten 5 bzw. 6 einzeln abschaltbar. Bei unbenutzt eingeschobenen Verlängerungssegmenten 5,6 werden die zugeordneten Heizkörper 8 bzw. 10 ausgeschaltet. Bei eingeschobenem Verlängerungssegment würde zwar die Aufheizung von unten einen Werkstücksabschnitt nicht bis auf eine Warmformtemperatur aufzuheizen, jedoch legt die ungestörte Handhabung und vor allem die Energieersparnis ein Abschalten unbenötigter Heizkörper nahe.

Auch bei teilweise eingeschobenen Verlängerungssegmenten erreichen die außerhalb der Segmente freiliegenden Werkstückenden regelmäßig auch dann nicht die für die Bogenformung benötigte und für die Handhabung heikle Warmformtemperatur, wenn sich ein darunterliegender Heizkörper bis zum Ende des Segments erstreckt und eingeschaltet ist. Gleichwohl kann es für solche Fälle von Interesse sein, die Heizkörper 8,10 noch in der Länge zu unterteilen, um Teilabschaltungen in Anpassung an die benötigten Bogenlängen zu ermöglichen.

Unterhalb der Heizkörper bildet der Heizkanal 3 einen längs des ganzen Werkstückkanals 2 horizontal langgestreckten Innenraum, der für einen Umluftbetrieb mit verschiedenen Luftleit- und Luftabsperreinrichtungen ausgestattet ist. In einem mittleren Bereich unterhalb des Kernsegments 4 ist eine Lufteinspeisung vorgesehen, die hier zu einem symmetrischen Ausblasen zu den Enden des Heizkanals 3 hin aus zwei Gebläsen 11, 12 mit gegensinnigen Ausblasrichtungen 13, 14 gebildet ist. Die auszublasende Luft wird über Ansagkanäle 15, 16 durch Ansaugöffnungen 17, 18 oberhalb der Gebläse 11, 12 aus dem Heizkanal 3 abgezogen, so dass sich im Heizkanal 3 ein zunächst zu den Enden des Heizkanals gerichteter Luftstrom ergibt, der dann zu den Heizkörpern 8, 9 und 10 aufsteigt und zu den Ansaugöffnungen 17, 18 zurückwandert.

Der Werkstückkanal 2 wird in den Umluftbetrieb nicht unmittelbar einbezogen, erhält aber heiße aufsteigende Luft, von den Heizkörpern 8, 9 und 10 erwärmt und durch den Umluftbetrieb verteilt. Die in den Werkstückkanal 22 übertretende Luft wird, soweit sie stirnseitig entweicht, durch Lufteinzug über endseitige Zuluftöffnungen 19, 20 in den Heizkanal 3 ersetzt.

Im Heizkanal 3 sind gitterförmige Luftleitbleche 21, 22, 23, 24, 25, 26 vorgesehen, die die Luftbewegung lenken und verteilen und der Ausbildung ausgeprägter Strömungserscheinungen mit der Gefahr ungleichmäßiger Erhitzung begegnen.

Weiterhin sind Sperrklappen 27 und 28 jeweils im Bereich der Segmentenden - hier also zwischen Kernsegment 4 und Verlängerungssegment 5 bzw. 6 vorgesehen, die zu einer einfachen Handhabung schwenkbar gelagert sind, wobei die Anlenkung an einer dem Werkstückkanal 2 abgelegenen Seite, hier gegenüberliegend, vorgesehen ist, so dass die Klappe im geöffneten Zustand nicht abdeckend im Bereich der Auflagefläche 7 liegt.

Die Sperrklappen 27, 28 sind einzeln betätigbar und ermöglichen es, den vom Umluftstrom erfassten Innenraum des Heizkanals 3 auf den Bereich unter dem Kernsegment 4 zu begrenzen oder wahlweise zusätzlich unter den Verlängerungssegmenten 5 und 6 auszudehnen. Diese einfache Bauweise ist der Segmentbauweise des Werkstückkanals und der Unterteilung der Heizkörper mit einer Unterteilbarkeit des Heizkanals 3 zugeordnet. Es versteht sich, dass zusätzliche Klappen dieser Art auch für eine noch weitergehende Unterteilung des Heizkanals vorgesehen werden können.

## Patentansprüche

1. Aufheizgerät (1) für gestreckte Werkstücke, insbesondere im erweichten Zustand zu verformende Kunststoff-Profilabschnitte, mit einem gestreckten, umfangsseitig geschlossenen aber endseitig zumindest einenends offenen oder zu öffnenden Gehäuse, darin einem Werkstückkanal (2) zur Aufnahme zumindest eines Werkstücks und einem längs des Werkstückkanals und mit diesem über verteilte Zwischenöffnungen verbundenen Heizkanal (3) mit zumindest einem längs des Werkstückkanals (2) erstreckten Heizkörper (8, 9, 10) und zumindest einem Gebläse (11, 12) zur Erzeugung zumindest eines Luftstroms durch den Heizkanal (3), wobei der Werkstückkanal (2) aus Segmenten (4, 5, 6) mit einem gegenüber einem Längsabschnitt des Heizkanals (3) feststehenden Kernsegment (4) und zumindest einem längs des Heizkanals (3) wahlweise anschließenden Verlängerungssegment (5, 6) besteht, undder Heizkanal (3) sich über die Gesamtlänge des Werkstückkanals (2) erstreckt und in der Länge unterteilte Heizkörper (8, 9, 10) aufweist, **dadurch gekennzeichnet, dass** der Heizkanal (3) in sich seiner Längserstreckung längs des Kernsegments (4) und von Verlängerungssegmenten (4, 5, 6) des Werkstückkanals (2) unveränderlich erstreckt und unter den Verlängerungssegmenten (4, 5, 6) einzeln abschaltbare Heizkörper (8, 10) aufweist, wobei der Heizkanal (3) unterhalb der Heizkörper (8, 9, 10) einen längs des Werkstückkanals (2) langgestreckten Innenraum für einen Umluft-Betrieb bildet, in den der Werkstückkanal nicht unmittelbar einbezogen ist.

2. Aufheizgerät (1) nach Anspruch 1, **dadurch gekennzeichnet, dass** das bzw. jedes Verlängerungssegment (5, 6) als teleskopartig mit dem Kernsegment (4) zusammenschiebbares Element ausgebildet ist.

3. Aufheizgerät (1) nach Anspruch 2, **dadurch gekennzeichnet, dass** der Heizkanal (3) unterhalb des Werkstückkanals (2) verläuft und dass das bzw. jedes Verlängerungssegment (5, 6) als ausziehbare Haube gestaltet ist.

4. Aufheizgerät (1) nach Anspruch 1, 2 oder 3, **dadurch gekennzeichnet,** das die Heizkörper (8, 9, 10) in Form von elektrischen Heizstäben ausgebildet und längs des Werkstückskanals (2) entsprechend den Enden der Segmente (4, 5, 6) unterteilt sind.

5. Aufheizgerät (1) nach einem der Ansprüche 1 bis 4, **dadurch gekennzeichnet, dass** die Heizkörper (8, 9, 10) unterseitig zu dem Werkstückkanal (2) unterhalb einer Auflagefläche (7) mit über die gesamte Länge verteilten Zwischenöffnungen angeordnet sind.

6. Aufheizgerät (1) nach einem der Ansprüche 1 bis 5, **dadurch gekennzeichnet, dass** der Heizkanal (3) in einem dem Kernsegment (4) des Werkstückkanals (2) benachbarten Bereich das bzw. zumindest ein Gebläse (11, 12) und zu einem Ende des Bereichs zumindest eine zu öffnende Sperrwand (27, 28) zur segmentweisen Unterteilung des Heizkanals (3) aufweist.

7. Aufheizgerät (1) nach Anspruch 6, **dadurch gekennzeichnet, dass** die Sperrwand als schwenkbare Sperrklappe (27, 28) ausgebildet ist.

8. Aufheizgerät nach Anspruch 7, **dadurch gekennzeichnet, dass** die Sperrklappe (27, 28) auf einer dem Werkstückkanal (2) abgelegenen Seite des Heizkanals (3) angelenkt ist.

9. Aufheizgerät nach einem der Ansprüche 6 bis 8, **dadurch gekennzeichnet, dass** ein dem Kernsegment (4) des Werkstückkanals (2) benachbarter Bereich des Heizkanals (3) zumindest eine Ansaugöffnung (17, 18) für das bzw. die Gebläse (11, 12) aufweist.

10. Aufheizgerät nach einem der Ansprüche 1 bis 9, **dadurch gekennzeichnet, dass** der Heizkanal (3) mit zumindest teilweise perforierten Leitplatten (21, 22, 23, 24, 25, 26) für den Umluftstrom versehen ist.

## Claims

1. Heating apparatus (1) for elongate workpieces, in particular plastics profiled portions to be deformed in the softened state, comprising an elongate housing that is closed at the sides but is open or can be opened at least at one end, comprising therein a workpiece channel (2), for receiving at least one workpiece, and a heating channel (3), which is connected along and to the workpiece channel by means of distributed intermediate openings and comprises at least one heating body (8, 9, 10) extending along the workpiece channel (2) and at least one fan (11, 12) for generating at least one air flow through the heating channel (3), the workpiece channel (2) consisting of segments (4, 5, 6) having a core segment (4) that is stationary relative to a longitudinal portion of the heating channel (3) and at least one extension segment (5, 6) that is optionally adjoining along the heating channel (3), and the heating channel (3) extending over the entire length of the workpiece channel (2) and comprising heating bodies (8, 9, 10) that are subdivided lengthways, **characterised in that** the heating channel (3) extends in its longitudinal extension along the core segment (4) and from extension segments (4, 5, 6) of the workpiece channel (2) in an unchanging manner and comprises individually disconnectable heating bodies (8, 10) below the extension segments (4, 5, 6), the heating channel (3) forming, below the heating bodies (8, 9, 10), an interior space extended along the workpiece channel (2) for air recirculation, in which space the workpiece channel is not directly incorporated.

2. Heating apparatus (1) according to claim 1, **characterised in that** the or each extension segment (5, 6) is designed as an element which can be telescoped into the core segment (4).

3. Heating apparatus (1) according to claim 2, **characterised in that** the heating channel (3) extends below the workpiece channel (2) and **in that** the or each extension segment (5, 6) is designed as an extensible hood.

4. Heating apparatus (1) according to claims 1, 2 or 3, **characterised in that** the heating bodies (8, 9, 10) are in the form of electrical heating rods and are subdivided in line with the ends of the segments (4, 5, 6) along the workpiece channel (2).

5. Heating apparatus (1) according to any of claims 1 to 4, **characterised in that** the heating bodies (8, 9, 10) are arranged below a contact surface (7) comprising intermediate openings distributed over the entire length, so as to be underneath the workpiece channel (2).

6. Heating apparatus (1) according to any of claims 1 to 5, **characterised in that** the heating channel (3) comprises the or at least one fan (11, 12) in a region adjacent to the core segment (4) of the workpiece channel (2) and comprises at one end of the region at least one barrier wall (27, 28) that can be opened for subdividing the heating channel (3) into segments.

7. Heating apparatus (1) according to claim 6, **characterised in that** the barrier wall is designed as a pivotable barrier flap (27, 28).

8. Heating apparatus (1) according to claim 7, **characterised in that** the barrier flap (27, 28) is articulated to a side of the heating channel (3) remote from the workpiece channel (2).

9. Heating apparatus (1) according to any of claims 6 to 8, **characterised in that** a region of the heating channel (3) adjacent to the core segment (4) of the workpiece channel (2) comprises at least one intake opening (17, 18) for the fan(s) (11, 12).

10. Heating apparatus (1) according to any of claims 1 to 9, **characterised in that** the heating channel (3) is provided with deflector plates (21, 22, 23, 24, 25, 26) that are perforated at least in part for the circulating air flow.

## Revendications

1. Appareil de chauffage (1) destiné à des pièces allongées, en particulier des tronçons profilés en matière plastique à mettre en forme à l'état ramolli, ledit appareil de chauffage comprenant un boîtier allongé qui est fermé sur la périphérie mais qui est ouvert ou peut être ouvert du côté extrémité au moins à une extrémité, à l'intérieur un conduit de pièces (2) qui est destiné à recevoir au moins une pièce et un conduit de chauffage (3) qui s'étend le long du conduit de pièces, qui est relié à celui-ci par des orifices intermédiaires répartis et qui comporte au moins un corps chauffage (8, 9, 10) s'étendant le long du conduit de pièces (2) et au moins un ventilateur (11, 12) destiné à générer au moins un flux d'air à travers le conduit de chauffage (3), le conduit de pièces (2) étant constitué de segments (4, 5, 6) comportant un segment de noyau (4) fixe par un rapport à une partie longitudinale du conduit de chauffage (3) et d'au moins un segment d'extension (5, 6) éventuellement adjacent le long du conduit de chauffage (3) et le conduit de chauffage (3) s'étendant sur toute la longueur du conduit de pièces (2) et comportant des corps chauffants (8, 9, 10) subdivisé dans le sens de la longueur, **caractérisé en ce que** le conduit de chauffage (3) s'étend de manière constante dans son extension longitudinale le long du segment central (4) et depuis des segments d'extension (4, 5, 6) du conduit de pièces (2) et comporte, au-dessous des segments d'extension (4, 5, 6), des corps chauffant (8, 10) commutables individuellement, le conduit de chauffage (3) formant au-dessous des corps chauffants (8, 9, 10) un espace intérieur s'étendant en longueur le long du conduit de pièces (2) et destiné à un fonctionnement à air de circulation dans lequel le conduit de pièces n'est pas directement impliqué.

2. Appareil de chauffage (1) selon la revendication 1, **caractérisé en ce que** le ou chaque segment d'extension (5, 6) est réalisé sous la forme d'un élément escamotable de manière télescopique avec le segment central (4).

3. Appareil de chauffage (1) selon la revendication 2, **caractérisé en ce que** le conduit de chauffage (3) s'étend au-dessous du conduit de pièces (2) et **en ce que** le ou chaque segment d'extension (5, 6) est réalisé sous la forme d'un capot déployable.

4. Appareil de chauffage (1) selon la revendication 1, 2 ou 3, **caractérisé en ce que** les corps chauffants (8, 9, 10) sont réalisés sous la forme de barres chauffantes électriques et sont divisés le long du conduit de pièces (2) en correspondance des extrémités des segments (4, 5, 6).

5. Appareil de chauffage (1) selon l'une des revendications 1 à 4, **caractérisé en ce que** les corps chauffants (8, 9, 10) sont disposés du côté inférieur du conduit de pièces (2) au-dessous d'une surface d'appui (7) pourvues d'orifices intermédiaires répartis sur toute la longueur.

6. Appareil de chauffage (1) selon l'une des revendications 1 à 5, **caractérisé en ce que** le conduit de chauffage (3) comporte, dans la zone adjacente au segment central (4) du conduit de pièces (2), le ou au moins un ventilateur (11, 12) et à une extrémité de la zone au moins une paroi de blocage ouvrable (27, 28) servant à subdiviser le conduit de chauffage (3) en segments.

7. Appareil de chauffage (1) selon la revendication 6, **caractérisé en ce que** la paroi de blocage est conçue comme un volet de blocage pivotant (27, 28).

8. Appareil de chauffage selon la revendication 7, **caractérisé en ce que** le volet de blocage (27, 28) est articulé sur un côté, opposé au conduit de pièces (2), du conduit de chauffage (3).

9. Appareil de chauffage selon l'une des revendications 6 à 8, **caractérisé en ce qu'**une zone, adjacente au segment central (4) du conduit de pièces (2), du conduit de chauffage (3) comporte au moins un orifice d'aspiration (17, 18) destiné à la soufflante ou aux soufflantes (11, 12).

10. Appareil de chauffage selon l'une des revendications 1 à 9, **caractérisé en ce que** le conduit de chauffage (3) est pourvu de plaques (21, 22, 23, 24, 25, 26), au moins partiellement perforées, qui sont destinées au flux d'air de circulation.
